# EUROPEAN PATENT APPLICATION

(11) **EP 4 372 893 A1**
(43) Date of publication of application: **22.05.2024**
(21) Application number: 22858762.2
(22) Date of filing: 17.08.2022
(51) Int. Cl.: H01M 50/403, H01M 50/417, H01M 50/489, H01M 50/494, H01M 10/052, C08J 9/28

(54) **METHOD FOR MANUFACTURING LITHIUM SECONDARY BATTERY SEPARATOR HAVING CROSS-LINKED STRUCTURE, LITHIUM SECONDARY BATTERY SEPARATOR HAVING CROSS-LINKED STRUCTURE, MANUFACTURED THEREBY, AND LITHIUM SECONDARY BATTERY COMPRISING SAME**

(30) Priority: 17.08.2021 KR 20210108336
(71) Applicant: LG Chem, Ltd., Yeongdeungpo-gu Seoul 07336 (KR)
(72) Inventor: LEE, Joo-Sung, Daejeon 34122 (KR); MUN, Sung Cik, Daejeon 34122 (KR); HAN, Sung-Jae, Daejeon 34122 (KR); KIM, Bong-Tae, Daejeon 34122 (KR); JUNG, Kil-An, Daejeon 34122 (KR)
(74) Representative: Hoffmann Eitle
(86) International application number: PCT/KR2022/012304
(87) International publication number: WO 2023/022525

(57) **Abstract**

The present disclosure relates to a method for manufacturing a crosslinked structure-containing separator for a lithium secondary battery, including the steps of: supplying polyolefin and a diluting agent to an extruder to extrude a polyolefin composition; molding and orienting the extruded polyolefin composition into the form of a sheet; dipping the oriented sheet in an extraction solution to extract the diluting agent, thereby providing a polyolefin-based porous support; and irradiating ultraviolet rays to the polyolefin-based porous support, wherein the extraction solution has an upper layer and a lower layer, the lower layer includes a photoinitiator and a solvent for the photoinitiator, the upper layer includes a non-solvent for the photoinitiator, and the photoinitiator is present in an amount of 0.01-0.3 parts by weight based on 100 parts by weight of the solvent for the photoinitiator. The present disclosure also relates to a crosslinked structure-containing separator for a lithium secondary battery obtained from the method, and a lithium secondary battery including the crosslinked structure-containing separator for a lithium secondary battery. The crosslinked structure-containing separator for a lithium secondary battery uses a minimized amount of photoinitiator to prevent degradation of the mechanical strength of the separator after crosslinking, while accomplishing crosslinking of the polyolefin porous support.

## Description

### TECHNICAL FIELD

The present disclosure relates to a method for manufacturing a crosslinked structure-containing separator for a lithium secondary battery, a crosslinked structure-containing separator for a lithium secondary battery obtained thereby, and a lithium secondary battery including the same.

The present application claims priority to Korean Patent Application No. 10-2021-0108336 filed on August 17, 2021 in the Republic of Korea, the disclosures of which are incorporated herein by reference.

### BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

Such a lithium secondary battery includes a positive electrode, a negative electrode, an electrolyte and a separator. Particularly, it is required for the separator to have insulation property for separating and electrically insulating the positive electrode and the negative electrode from each other and high ion conductivity for increasing lithium-ion permeability based on high porosity.

Since the separator functions to insulate the positive electrode and the negative electrode electrically from each other, it should electrically insulate both electrodes from each other even when the battery is subjected to an abnormal situation, such as high temperature. However, in the case of a polyolefin separator used widely as a separator, it has a low melting point (Tₘ) and may cause ignition and explosion, when a battery is used abnormally and the battery temperature is increased to the melting point of polyolefin or higher to generate a meltdown phenomenon, and also shows a severe heat shrinking behavior under a high temperature condition, or the like, due to its material property and characteristics during its manufacturing process, thereby causing a safety-related problem, such as an internal short-circuit.

Therefore, there is an imminent need for a separator capable of ensuring safety at high temperature.

### DISCLOSURE

### Technical Problem

The present disclosure is designed to solve the problems of the related art, and therefore the present disclosure is directed to providing a method for manufacturing a crosslinked structure-containing separator for a lithium secondary battery which can provide improved high-temperature safety and excellent mechanical strength.

The present disclosure is also directed to providing a crosslinked structure-containing separator for a lithium secondary battery having excellent high-temperature safety and mechanical strength, and a lithium secondary battery including the same.

### Technical Solution

In one aspect of the present disclosure, there is provided a method for manufacturing a crosslinked structure-containing separator for a lithium secondary battery according to any one of the following embodiments.

According to the first embodiment, there is provided a method for manufacturing a crosslinked structure-containing separator for a lithium secondary battery, including the steps of:
supplying polyolefin and a diluting agent to an extruder to extrude a polyolefin composition;
molding and orienting the extruded polyolefin composition into the form of a sheet;
dipping the oriented sheet in an extraction solution to extract the diluting agent, thereby providing a polyolefin-based porous support; and
irradiating ultraviolet rays to the polyolefin-based porous support,
wherein the extraction solution has an upper layer and a lower layer,
the lower layer includes a photoinitiator and a solvent for the photoinitiator,
the upper layer includes a non-solvent for the photoinitiator, and
the photoinitiator is present in an amount of 0.01-0.3 parts by weight based on 100 parts by weight of the solvent for the photoinitiator.

According to the second embodiment, there is provided the method for manufacturing a crosslinked structure-containing separator for a lithium secondary battery as defined in the first embodiment, wherein the solvent for the photoinitiator is an extraction solvent for the diluting agent.

According to the third embodiment, there is provided the method for manufacturing a crosslinked structure-containing separator for a lithium secondary battery as defined in the second embodiment, wherein the extraction solvent for the diluting agent includes methyl ethyl ketone, methylene chloride, hexane, or two or more of them.

According to the fourth embodiment, there is provided the method for manufacturing a crosslinked structure-containing separator for a lithium secondary battery as defined in any one of the first to the third embodiment, wherein the photoinitiator includes a Type 2 photoinitiator.

According to the fifth embodiment, there is provided the method for manufacturing a crosslinked structure-containing separator for a lithium secondary battery as defined in any one of the first to the fourth embodiment, wherein the photoinitiator includes thioxanthone (TX), a thioxanthone derivative, benzophenone (BPO), a benzophenone derivative, or two or more of them.

According to the sixth embodiment, there is provided the method for manufacturing a crosslinked structure-containing separator for a lithium secondary battery as defined in any one of the first to the fifth embodiment, wherein the non-solvent for the photoinitiator includes water, methanol, ethanol, isopropanol, butanol, butanediol, ethylene glycol, propylene glycol, tripropylene glycol, or two or more of them.

According to the seventh embodiment, there is provided the method for manufacturing a crosslinked structure-containing separator for a lithium secondary battery as defined in any one of the first to the sixth embodiment, wherein the ultraviolet rays are irradiated at a dose of 10-2000 mJ/cm².

In another aspect of the present disclosure, there is provided a crosslinked structure-containing separator for a lithium secondary battery according to any one of the following embodiments.

According to the eighth embodiment, there is provided a crosslinked structure-containing separator for a lithium secondary battery obtained by the method as defined in any one of the first to the seventh embodiments.

According to the ninth embodiment, there is provided the crosslinked structure-containing separator for a lithium secondary battery as defined in the eighth embodiment, which has a meltdown temperature of 160°C or higher.

According to the tenth embodiment, there is provided the crosslinked structure-containing separator for a lithium secondary battery as defined in the eighth or the ninth embodiment, which has a crosslinking degree of 10-45%.

According to the eleventh embodiment, there is provided the crosslinked structure-containing separator for a lithium secondary battery as defined in any one of the eighth to the tenth embodiments, which shows a tensile strength of 1,500 kgf/cm² or more in each of the machine direction and the transverse direction.

According to the twelfth embodiment, there is provided the crosslinked structure-containing separator for a lithium secondary battery as defined in any one of the eighth to the eleventh embodiments, which shows a change in tensile strength of 30% or less in each of the machine direction and the transverse direction, as compared to the separator for a lithium secondary battery before crosslinking.

According to the thirteenth embodiment, there is provided the crosslinked structure-containing separator for a lithium secondary battery as defined in any one of the eighth to the twelfth embodiments, which has a shutdown temperature of 145°C or less.

In still another aspect of the present disclosure, there is provided a lithium secondary battery according to the following embodiment.

According to the fourteenth embodiment, there is provided a lithium secondary battery including a positive electrode, a negative electrode and a separator interposed between the positive electrode and the negative electrode, wherein the separator is the crosslinked structure-containing separator for a lithium secondary battery as defined in any one of the eighth to the thirteenth embodiments.

### Advantageous Effects

The method for manufacturing a crosslinked structure-containing separator for a lithium secondary battery according to an embodiment of the present disclosure accomplishes effective crosslinking of the polyolefin porous support, while minimizing side reactions.

The method for manufacturing a crosslinked structure-containing separator for a lithium secondary battery according to an embodiment of the present disclosure provides increased photocrosslinking efficiency of the polyolefin porous support, since the photoinitiator can be migrated into the polyolefin porous support by the non-solvent for the photoinitiator.

The crosslinked structure-containing separator for a lithium secondary battery obtained from the method for manufacturing a crosslinked structure-containing separator for a lithium secondary battery according to an embodiment of the present disclosure includes a crosslinked structure-containing polyolefin porous support having a crosslinked structure including polymer chains interconnected directly with one another, and thus shows excellent high-temperature safety and mechanical strength.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided method for manufacturing a crosslinked structure-containing separator for a lithium secondary battery, including the steps of:
supplying polyolefin and a diluting agent to an extruder to extrude a polyolefin composition;
molding and orienting the extruded polyolefin composition in the form of a sheet;
dipping the oriented sheet in an extraction solution to extract the diluting agent, thereby providing a polyolefin-based porous support; and
irradiating ultraviolet rays to the polyolefin-based porous support,
wherein the extraction solution has an upper layer and a lower layer,
the lower layer includes a photoinitiator and a solvent for the photoinitiator,
the upper layer includes a non-solvent for the photoinitiator, and
the photoinitiator is present in an amount of 0.01-0.3 parts by weight based on 100 parts by weight of the solvent for the photoinitiator.

Hereinafter, the method for manufacturing a crosslinked structure-containing separator for a lithium secondary battery according to an embodiment of the present disclosure will be explained with reference to the main parts thereof.

According to the present disclosure, the photoinitiator is introduced to the surface of the polyolefin porous support, and the polyolefin porous support may be crosslinked upon the irradiation with ultraviolet rays. Herein, the term `surface of a polyolefin porous support' may include not only the outermost surface of the polyolefin porous support but also the surfaces of the pores present inside of the polyolefin porous support.

The photoinitiator performs direct crosslinking of the polymer chains in the polyolefin porous support. The photoinitiator alone may perform the crosslinking of the polyolefin support with no aid of another crosslinking agent, a co-initiator or a synergist. The photoinitiator is converted into a reactive compound, while hydrogen atoms are removed through hydrogen abstraction merely by light absorption. Then, the photoinitiator forms radicals in the polymer chains in the polyolefin porous support, and makes the polymer chains reactive, thereby allowing the polymer chains to be interconnected directly with one another to perform photo-crosslinking.

The method for manufacturing a crosslinked structure-containing separator for a lithium secondary battery according to an embodiment of the present disclosure uses the photoinitiator to generate radicals in the polymer chains in the polyolefin porous support, thereby forming a crosslinked structure including polymer chains interconnected directly with one another.

Herein, since the photoinitiator functions to form radicals in the polymer chains in the polyolefin porous support, the content of the photoinitiator plays an important role in formation of radicals.

When the radicals are formed excessively, the photoinitiator molecules may react among themselves or the photoinitiator may be crosslinked with the polymer chains. The resultant crosslinked structure has a lower reaction enthalpy as compared to the crosslinked structure among the polymer chains in the polyolefin porous support, and may be decomposed during the charge/discharge of a battery to cause side reactions. In addition, when the photoinitiator reacts with the polymer chains, the melting point of the polyolefin chains is decreased undesirably to cause degradation of characteristics, such as shutdown temperature, of the separator.

According to the present disclosure, a non-solvent for the photoinitiator is used to allow the photoinitiator to be distributed uniformly in the pores of the polyolefin porous support, thereby increasing the crosslinking efficiency of the polyolefin porous support and minimizing the content of the photoinitiator.

In the method for manufacturing a crosslinked structure-containing separator for a lithium secondary battery according to an embodiment of the present disclosure, the non-solvent for the photoinitiator is applied to the polyolefin porous support including the photoinitiator applied thereto to cause migration of the photoinitiator into the polyolefin porous support by the non-solvent. In this manner, it is possible to increase the crosslinking efficiency of the polyolefin porous support, and thus to perform crosslinking even with a small amount of photoinitiator.

First, polyolefin and a diluting agent are supplied to an extruder to extrude a polyolefin composition.

According to an embodiment of the present disclosure, the polyolefin may include polyethylene; polypropylene; polybutylene; polypentene; polyhexene; polyoctene; a copolymer of at least two of ethylene, propylene, butene, pentene, 4-methylpentene, hexane, heptane and octene; or a mixture thereof.

Non-limiting examples of the polyethylene include low-density polyethylene (LDPE), linear low-density polyethylene (LLDPE), high-density polyethylene (HDPE), or the like. When the polyethylene is high-density polyethylene having a high crystallization degree and a high resin melting point, it is possible to provide a desired level of heat resistance and an increased modulus.

According to an embodiment of the present disclosure, the polyolefin may have a weight average molecular weight of 200,000-1,500,000. For example, the polyolefin may have a weight average molecular weight of 220,000 or more, 250,000 or more, 300,000 or more, 600,000 or more, 800,000 or more, or 1,000,000 or more, and 1,000,000 or less, 800,000 or less, 600,000 or less, 300,000 or less, 250,000 or less, or 220,000 or less. When the polyolefin has the above-defined range of weight average molecular weight, it is possible to provide the finished separator with excellent strength and heat resistance, while ensuring the uniformity and film-forming processability of the polyolefin porous support.

Herein, the weight average molecular weight may be determined by using gel permeation chromatography (GPC) (PL GPC220, Agilent Technologies) under the following analysis conditions:
- Column: PL Olexis (Polymer Laboratories)
- Solvent: Trichlorobenzene (TCB)
- Flow rate: 1.0 mL/min
- Sample concentration: 1.0 mg/mL
- Injection amount: 200 µL
- Column temperature: 160°C
- Detector: Agilent High Temperature RI detector
- Standard: Polystyrene (corrected with tertiary function)

According to an embodiment of the present disclosure, the diluting agent may include: paraffin; wax; soybean oil; a phthalic acid ester, such as dibutyl phthalate, dihexyl phthalate, dioctyl phthalate, or the like; aromatic ether, such as diphenyl ether, benzyl ether, or the like; C10-C20 fatty acid, such as palmitic acid, stearic acid, oleic acid, linolic acid, linoleic acid, or the like; C10-C20 fatty acid alcohol, such as palmitic acid alcohol, stearic acid alcohol, oleic acid alcohol, or the like; or a fatty acid ester in which one or at least two fatty acids of saturated or unsaturated fatty acids whose fatty acid group has 4-26 carbon atoms, or unsaturated fatty acids whose double bond is substituted with epoxy are ester-bound with a C1-C10 alcohol having 1-8 hydroxyl groups, such as palmitic acid mono-, di- or tri-ester, stearic acid mono-, di- or tri-ester, oleic acid mono-, di- or tri-ester, linoleic acid mono-, di- or tri-ester, or the like; or two or more of them.

The weight ratio of polyolefin to the diluting agent may be 50:50-20:80, or 40:60-30:70. When the weight ratio of polyolefin to the diluting agent satisfies the above-defined range, the finished polyolefin porous support may ensure a suitable level of porosity and average pore size, and the pores may be interconnected to provide improved permeability. In addition, it is possible to prevent an increase in extrusion load to ensure an easily processable level of viscosity, and to prevent polyolefin from being extruded in the form of gel to cause the problems of breakage upon orientation and non-uniform thickness, while not being kneaded thermodynamically with the diluting agent. It is also possible to prevent the finished polyolefin porous support from undergoing degradation of the strength.

In addition to the polyolefin and the diluting agent, an antioxidant may be further added to the extruder. The antioxidant may control the radicals formed in the polyolefin chains, thereby controlling the crosslinking between the polymer chains. The antioxidant is oxidized instead of the polymer chains to prevent oxidation of the polymer chains, or absorbs the radicals to control the crosslinking between the polymer chains.

According to an embodiment of the present disclosure, the content of the antioxidant may be 500-20000 ppm based on the weight of the polyolefin porous support. For example, the content of the antioxidant may be 1000 ppm or more, 1500 ppm or more, 2000 ppm or more, 5000 ppm or more, 10000 ppm or more, 13000 ppm or more, or 15000 ppm or more, and 15000 ppm or less, 13000 ppm or less, 10000 ppm or less, 5000 ppm or less, or 2000 ppm or less, based on the weight of the polyolefin porous support. When the content of the antioxidant satisfies the above-defined range, the antioxidant can sufficiently control excessive formation of radicals, and thus can prevent the problem of side reactions, while preventing the polyolefin porous support from surface roughening.

Such antioxidants may be classified into radical scavengers which react with the radicals formed in polyolefin to stabilize polyolefin, and peroxide decomposers which decompose the peroxide produced by the radicals into a stable form of molecule. The radical scavenger releases hydrogen, stabilizes radicals, and is converted into radicals in itself. However, the radical scavenger may remain in a stable form through the resonance effect or electron rearrangement. The peroxide decomposer may realize an enhanced effect, when being used in combination with the radical scavenger.

According to an embodiment of the present disclosure, the antioxidant may include a first antioxidant as a radical scavenger and a second antioxidant as a peroxide decomposer. The first antioxidant and the second antioxidant have different acting mechanisms. Therefore, when using the first antioxidant as a radical scavenger and the second antioxidant as a peroxide decomposer at the same time, it is possible to easily inhibit undesired radical formation through the synergic effect of the antioxidants.

The content of the first antioxidant may be the same as or different from the content of the second antioxidant.

According to an embodiment of the present disclosure, the first antioxidant may include a phenolic antioxidant, an amine-based antioxidant, or a mixture thereof.

The phenolic antioxidant may include 2,6-di-t-butyl-4-methylphenol, 4,4'-thiobis(2-t-butyl-5-methylphenol), 2,2'-thiodiethylbis-[3-(3,5-di-t-butyl-4-hydroxyphenyl) propionate], pentaerythritol-tetrakis[3-(3,5-di-t-butyl-4-hydroxyphenyl)propionate], 4,4'-thiobis(2-methyl-6-t-butylphenol), 2,2'-thiobis(6-t-butyl-4-methylphenol), octadecyl-[3-(3,5-di-t-butyl-4-hydroxyphenyl)propionate], triethylene glycol-bis-[3-(3-t-butyl-4-hydroxy-5-methylphenol)propionate], thiodiethylene bis[3-(3,5-di-t-butyl-4-hydroxyphenyl)propionate], 6,6'-di-t-butyl-2,2'-thiodi-p-cresol, 1,3,5-tris(4-t-butyl-3-hydroxy-2,6-xylyl)methyl-1,3,5-triazine-2,4,6-(1H,3H,5H)-trione, dioctadecyl 3,3'-thiodipropionate, or two or more of them.

According to an embodiment of the present disclosure, the content of the first antioxidant may be 500-10000 ppm based on the weight of the polyolefin porous support. For example, the content of the first antioxidant may be 1000 ppm or more, 1500 ppm or more, 2000 ppm or more, or 5000 ppm or more, and 5000 ppm or less, 2000 ppm or less, or 1000 ppm or less, based on the weight of the polyolefin porous support. When the content of the first antioxidant satisfies the above-defined range, it is possible to easily prevent the problem of side reactions caused by excessive formation of radicals.

According to an embodiment of the present disclosure, the second antioxidant may include a phosphorus-based antioxidant, a sulfur-based antioxidant, or a mixture thereof.

The phosphorus-based antioxidant decomposes peroxide to form alcohol and is converted into phosphate. The phosphorus-based antioxidant may include 3,9-bis(2,6-dit-butyl-4-methylphenoxy)-2,4,8,10-tetraoxa-3,9-diphosphaspiro[5,5]undecane, bis(2,6-dicumylphenyl)pentaerythritol diphosphite, 2,2'-methylene bis(4,6-d-t-butylphenyl) 2-ethylhexyl phosphite, bis(2,4-di-t-butyl-6-methylphenyl)-ethyl-phosphite, bis(2,6-di-t-butyl-4-methylphenyl)pentaerythritol diphosphite, bis(2,4-di-t-butylphenyl)pentaerythritol diphosphite, bis(2,4-dicumylphenyl)pentaerythritol diphosphite, distearyl pentaerythritol diphosphite, tris(2,4-di-t-butylphenyl)phosphite, or two or more of them.

The sulfur-based antioxidant may include 3,3'-thiobis-1,1'-didocecyl ester, dimethyl 3,3'-thiodipropionate, dioctadecyl 3,3'-thiodipripionate, 2,2-bis{[3-(dodecylthio)-1-oxopropoxy]methyl}propane-1,3-diyl bis[3-(dodecylthio)propionate], or two or more of them.

According to an embodiment of the present disclosure, the content of the second antioxidant may be 500-10000 ppm based on the weight of the polyolefin porous support. For example, the content of the second antioxidant may be 1000 ppm or more, 1500 ppm or more, 2000 ppm or more, or 5000 ppm or more, and 5000 ppm or less, 2000 ppm or less, or 1000 ppm or less, based on the weight of the polyolefin porous support. When the content of the second antioxidant satisfies the above-defined range, it is possible to easily prevent the problem of side reactions caused by excessive formation of radicals.

According to an embodiment of the present disclosure, when the antioxidant includes a first antioxidant as a radical scavenger and a second antioxidant as a peroxide decomposer at the same time, the content of the first antioxidant may be 500-10000 ppm based on the weight of the polyolefin porous support, and the content of the second antioxidant may be 500-10000 ppm based on the weight of the polyolefin porous support.

The extrusion may be carried out by using a monoaxial or biaxial extruder at a temperature of 160-240°C for several minutes. To carry out homogeneous reactive extrusion, an extruder using a screw having a ratio of length/diameter (L/D) of 30 or more may be used.

Next, the extruded polyolefin composition is molded and oriented into the form of a sheet.

The extruded polyolefin composition is cooled through the die and the cooling roll. Herein, phase separation may occur between the polyolefin and the diluting agent. The phase separation time may affect the BET specific surface area, average pore size, pore shape, etc. of the finished polyolefin porous support.

According to an embodiment of the present disclosure, the orientation may be carried out by sequential or simultaneous orientation using a roll or a tenter. The orientation ratio may be 3 times or more, or 5-10 times, each in the machine direction and the transverse direction, and the total orientation ratio may be 20-80 times. When the orientation ratio satisfies the above-defined ratio, it is possible to prevent the problem of insufficient orientation in one direction, a failure in balance of physical properties between the machine direction and the transverse direction, and degradation of tensile strength and puncture strength. It is also possible to prevent non-orientation and a failure in formation of pores, or to prevent the problem of an increase in shrinkage of the polyolefin porous support caused by breakage during orientation.

As used herein, 'machine direction' refers to the direction of progress during the continuous production of a separator, i.e. the longitudinal direction of the separator, while `transverse direction' refers to the transverse direction to the machine direction, i.e. the direction perpendicular to the direction of progress during the continuous production of a separator, i.e. the direction perpendicular to the longitudinal direction of the separator.

The orientation temperature may vary with the melting point of the polyolefin used herein and the concentration and type of the diluting agent, and may be selected in such a temperature range that 30-80 wt% of the crystalline segments of the polyolefin in the sheet may be molten. When the orientation temperature satisfies the above-defined range, it is possible to prevent the problem of breakage or non-orientation caused by the lack of softness. In addition, it is possible to prevent a difference in thickness caused by partial over-orientation, or degradation of physical properties caused by a low polyolefin orientation effect. Meanwhile, how much the crystalline segments melt depending on temperature may be obtained through the differential scanning calorimetry (DSC) of the sheet.

Then, the oriented sheet is dipped in an extraction solution to extract the diluting agent, thereby providing a polyolefin porous support. Herein, while the oriented sheet is subjected to the extraction solution, the diluting agent is extracted to provide a polyolefin porous support having pores formed therein.

The extraction solution has an upper layer and a lower layer, wherein the lower layer includes a photoinitiator and a solvent for the photoinitiator, and the upper layer includes a non-solvent for the photoinitiator.

The photoinitiator is present in the lower layer of the extraction solution, and thus the photoinitiator may be applied to the surface of the polyolefin porous support when the oriented sheet is dipped in the extraction solution.

While the polyolefin porous support including the photoinitiator applied to the surface thereof is subjected to the upper layer of the extraction solution, the non-solvent for the photoinitiator present in the upper layer of the extraction solution may be applied to the polyolefin porous support including the photoinitiator applied to the surface thereof. Since the non-solvent for the photoinitiator may cause migration of the photoinitiator present on the surface of the polyolefin porous support into the pores of the polyolefin porous support, it is possible to increase the crosslinking efficiency of the polyolefin porous support. In addition, since the non-solvent for the photoinitiator can remove an excessive amount of photoinitiator present in the polyolefin porous support and the solvent for the photoinitiator, it is possible to prevent the polyolefin porous support from being over-crosslinked.

Since the non-solvent for the photoinitiator is applied to the polyolefin porous support including the photoinitiator applied thereto, the crosslinking efficiency of the polyolefin porous support may be increased, as the content of the photoinitiator present in the polyolefin porous support is increased, even though the same amount of photoinitiator is used. In this manner, it is possible to perform crosslinking of the polyolefin porous support efficiently, even though a small amount of photoinitiator is used.

The method for manufacturing a crosslinked structure-containing separator for a lithium secondary battery according to an embodiment of the present disclosure allows crosslinking of the polyolefin porous support even with a small amount of photoinitiator. The photoinitiator is present in an amount of 0.01-0.3 parts by weight based on 100 parts by weight of the solvent for the photoinitiator.

When the content of the photoinitiator satisfies the above-defined range, it is possible to perform effective crosslinking of the polyolefin porous support, while preventing side reactions caused by excessive formation of radicals. For example, it is possible to prevent side reactions by allowing crosslinking to occur merely among the polymer chains, while preventing crosslinking of the photoinitiator molecules among themselves or crosslinking between the photoinitiator and the polymer chains, caused by excessive formation of radicals.

In addition, it is possible to prevent the separator from shrinking caused by excessive formation of radicals and rapid crosslinking. Therefore, it is possible to prevent degradation of the air permeability of the polyolefin porous support after crosslinking.

It is also possible to prevent degradation of the mechanical strength of the polyolefin porous support caused by excessive main chain scission of the polyolefin.

When the photoinitiator is present in an amount of less than 0.01 parts by weight based on 100 parts by weight of the solvent for the photoinitiator, it is difficult to form radicals to such a degree that the polyolefin porous support may be crosslinked sufficiently, and thus it is difficult to carry out crosslinking of the polyolefin porous support smoothly.

When the content of the photoinitiator is larger than 0.3 parts by weight based on 100 parts by weight of the solvent for the photoinitiator, the polyolefin porous support may be crosslinked, but side reactions occur due to excessive formation of radicals. For example, the photoinitiators may be crosslinked among themselves or the photoinitiators may be crosslinked with the polyolefin chains. In addition, rapid crosslinking occurs upon the irradiation with UV rays to cause shrinking of the separator and main chain scission of the polyolefin, resulting in degradation of the mechanical strength.

According to an embodiment of the present disclosure, the content of the photoinitiator may be 0.02 parts by weight or more, 0.03 parts by weight or more, 0.04 parts by weight or more, 0.05 parts by weight or more, or 0.1 parts by weight or more, and 0.1 parts by weight or less, or 0.05 parts by weight or less, based on 100 parts by weight of the solvent for the photoinitiator. When the content of the photoinitiator satisfies the above-defined range, it is possible to easily prevent generation of side reactions caused by excessive formation of radicals, while allowing effective crosslinking of the polyolefin porous support.

According to an embodiment of the present disclosure, the photoinitiator may include a Type 2 photoinitiator.

According to an embodiment of the present disclosure, the photoinitiator may include thioxanthone (TX), a thioxanthone derivative, benzophenone (BPO), a benzophenone derivative, or two or more of them.

Particular examples of the thioxanthone derivative may include, but are not limited to: 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3 -(2-methoxyethoxycarbonyl)-thioxanthone, 4-butoxycarbonyl-thioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethyoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxy-benzyl)-thioxanthone, 2-morpholinomethylthioxanthone, 2-methyl-6-morpholinomethyl-thioxanthone, N-allylthioxanthone-3,4-dicarboximide, N-octylthioxanthone-3,4-dicarboximide, N-(1,1,3,3-tetramethylbutyl)-thioxanthone-3,4,-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthone-2-yloxy)-N,N,N-trimethyl-1-propanaminium chloride, or the like.

Particular examples of the benzophenone derivative may include, but are not limited to: 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)-benzophenone, 3,3'-dimethyl-4-methoxy-benzophenone, methyl-2-benzoyl benzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-propanaminium chloride monohydrate, 4-hydroxybenzophenone, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethaneminium chloride, or the like.

Particularly, when the photoinitiator includes 2-isopropyl thioxanthone, thioxanthone or a mixture thereof, the polyolefin porous support may be photo-crosslinked even with a lower light dose (e.g. 500 mJ/cm²) as compared to the photo-crosslinking using benzophenone, which is favorable in terms of mass production.

In addition, when the photoinitiator includes 2-isopropyl thioxanthone (ITX), ITX has a low melting point of about 70-80°C, and thus is molten on the surface of the polyolefin porous support at a photo-crosslinking temperature controlled to 80-100°C to generate mobility of ITX into the polyolefin porous support, resulting in an increase in crosslinking efficiency. Further, it is possible to easily prevent a change in physical properties of the finished separator.

According to an embodiment of the present disclosure, the solvent for the photoinitiator may be an extraction solvent for the diluting agent. For example, the extraction solvent for the diluting agent may include methyl ethyl ketone, methylene chloride, hexane, or two or more of them.

According to an embodiment of the present disclosure, the non-solvent for the photoinitiator may include water, methanol, ethanol, isopropanol, butanol, butanediol, ethylene glycol, propylene glycol, tripropylene glycol, or two or more of them.

The content of the diluting agent remaining after the extraction step may be 1 wt% or less based on 100 wt% of the polyolefin porous support. In this case, it is possible to prevent degradation of the physical properties of the polyolefin porous support and a decrease in permeability.

The content of the remaining diluting agent may be affected by the extraction temperature and the extraction time. Considering an increase in solubility of the diluting agent and organic solvent and the safety problem caused by the boiling of the organic solvent, the extraction temperature may be 40°C or less.

In addition, the extraction time may vary with the thickness of the polyolefin porous support to be obtained. In the case of a polyolefin porous support having a thickness of 10-30 µm, the extraction time may be 2-4 minutes.

After the above-mentioned steps are carried out, the polyolefin porous support may be thermally fixed. The thermal fixing is a process of fixing and heating the preliminary porous support so that the preliminary porous support to be shrunk may be fixed forcibly to remove residual stress.

According to an embodiment of the present disclosure, the thermal fixing temperature may be 125-132°C or 125-130°C. According to an embodiment of the present disclosure, the thermal fixing time may be 10 seconds or more, 20 seconds or more, or 30 seconds or more, and 120 seconds or less, 90 seconds or less, or 60 seconds or less. When the thermal fixing condition satisfies the above-defined ranges, rearrangement of the polyolefin molecules occurs, and thus it is possible to remove the residual stress of the finished polyolefin porous support and to prevent the problem of blocking of the pores of the polyolefin porous support caused by partial melting.

According to an embodiment of the present disclosure, the polyolefin porous support may be a porous film.

According to an embodiment of the present disclosure, the polyolefin porous support may have a number of double bonds present in the polyolefin chains of 0.01-0.5 per 1000 carbon atoms, as determined by ¹H-NMR. For example, the number of double bonds present in the polyolefin chains may be 0.02 or more, 0.03 or more, 0.04 or more, 0.05 or more, 0.06 or more, 0.07 or more, 0.08 or more, 0.09 or more, 0.1 or more, 0.2 or more, 0.3 or more, or 0.4 or more, and 0.4 or less, 0.3 or less, 0.2 or less, 0.1 or less, 0.09 or less, 0.08 or less, 0.07 or less, 0.06 or less, 0.05 or less, 0.04 or less, 0.03 or less, or 0.02 or less per 1000 carbon atoms, as determined by ¹H-NMR. When the polyolefin porous support has the above-defined number of double bonds, it is possible to control the radicals formed through the hydrogen abstraction from the double bond structures present in the polyolefin chains, caused by the photoinitiator, and thus to perform effective crosslinking of the polyolefin porous support, while minimizing side reactions caused by excessive formation of radicals.

The double bod structure present in the polymer chains may exist at the ends of the polyolefin chains, or inside of the polyolefin chains, i.e. throughout the polyolefin chains, except the ends of the polyolefin chains. Particularly, the number of double bond structures present in the polyolefin chains except the ends may affect the crosslinking of the polyolefin chains.

According to an embodiment of the present disclosure, the number of double bonds present in the polyolefin chains, except the ends, of the polyolefin porous support may be 0.005-0.49 per 1000 carbon atoms. Herein, `double bonds present in the polyolefin chains, except the ends' refers to double bonds present throughout the polyolefin chains, except the ends of the polyolefin chains. In addition, the term 'end' refers to the position of carbon atom linked to each of the both terminals of the polyolefin chains.

According to an embodiment of the present disclosure, the number of double bonds present in the polyolefin chains may be controlled by modifying the type and purity of a catalyst used for synthesizing polyolefin, addition of a linker, or the like.

The polyolefin porous support may have a BET specific surface area of 10-27 m²/g. For example, the polyolefin porous support may have a BET specific surface area of 11 m²/g or more, 13 m²/g or more, 15 m²/g or more, 17 m²/g or more, 19 m²/g or more, 21 m²/g or more, 23 m²/g or more, or 25 m²/g or more, and 25 m²/g or less, 23 m²/g or less, 21 m²/g or less, 19 m²/g or less, 17 m²/g or less, 15 m²/g or less, or 13 m²/g. When the BET specific surface area of the polyolefin porous support satisfies the above-defined range, the polyolefin porous support may have an increased surface area, and thus the crosslinking efficiency of the polyolefin porous support may be increased even with a small amount photoinitiator.

The BET specific surface area of the polyolefin porous support may be determined by the BET method. Particularly, BELSORP-mino II available from BEL Japan Co. may be used to calculate the BET specific surface area of the polyolefin porous support from the nitrogen gas adsorption at the temperature of liquid nitrogen (77K).

Then, ultraviolet rays are irradiated to the polyolefin porous support. As UV rays are irradiated, the polymer chains in the polyolefin porous support are crosslinked to obtain a crosslinked structure-containing polyolefin porous support.

UV irradiation is carried out by using a UV crosslinking system, while controlling UV irradiation time and irradiation dose adequately considering the content of the photoinitiator, or the like. For example, the UV irradiation time and irradiation dose may be set under such a condition that the polyolefin chains in the polyolefin porous support may be crosslinked sufficiently to ensure a desired level of heat resistance, while preventing the polyolefin porous support from being damaged by the heat generated by the UV lamp. In addition, the UV lamp used for the UV crosslinking system may be selected suitably from a high-temperature mercury lamp, metal lamp, gallium lamp, or the like, depending on the photoinitiator, and the light emission wavelength and dose of the UV lamp may be selected suitably depending on the process.

The method for manufacturing a crosslinked structure-containing separator for a lithium secondary battery according to an embodiment of the present disclosure can perform photo-crosslinking of the polymer chains in the polyolefin porous support even with a significantly smaller UV irradiation light dose as compared to the light dose used for general photo-crosslinking. Therefore, it is possible to increase the applicability to a mass production process. For example, the UV light dose may be 10-2000 mJ/cm², or 50 mJ/cm² or more, or 150 mJ/cm² or more, and 1000 mJ/cm² or less, or 500 mJ/cm² or less.

According to an embodiment of the present disclosure, `UV light dose' may be determined by using a portable light dose measuring instrument called H type UV bulb and UV power puck available from Miltec. When determining light dose by using H type UV bulb available from Miltec, three types of wavelength values of UVA, UVB and UVC are derived depending on wavelength, and UV rays used herein corresponds to UVA.

According to the present disclosure, the method for determining `UV light dose' includes passing UV power puck through a conveyer in the presence of a light source under the same condition as a sample, and the UV light dose value displayed in UV power puck is defined as `UV light dose'.

As described above, it is possible to obtain a crosslinked structure-containing separator for a lithium secondary battery by the method for manufacturing a crosslinked structure-containing separator for a lithium secondary battery according to an embodiment of the present disclosure.

The crosslinked structure-containing separator for a lithium secondary battery includes a crosslinked structure-containing polyolefin porous support having a crosslinked structure including polymer chains interconnected directly with one another. Since the crosslinked structure-containing separator for a lithium secondary battery according to an embodiment of the present disclosure is provided with such a crosslinked structure-containing polyolefin porous support having a crosslinked structure including polymer chains interconnected directly with one another, it shows improved heat resistance.

As used herein, the expression `crosslinked structure including polymer chains interconnected directly with one another' means a structure in which polymer chains substantially including polyolefin, preferably, including polyolefin alone, are provided with reactivity through the addition of a photoinitiator, and are crosslinked directly with one another. Therefore, crosslinking that occurs between polymer chains and an additionally introduced crosslinking agent does not correspond to `crosslinked structure including polymer chains interconnected directly with one another' as defined herein. In addition, crosslinking that occurs between such an additional crosslinking agent and polymer chains does not correspond to `crosslinked structure including polymer chains interconnected directly with one another' as define herein, even though the polymer chains substantially include polyolefin or include polyolefin alone.

According to an embodiment of the present disclosure, the crosslinked structure-containing polyolefin porous support may include only the crosslinked structure including polymer chains interconnected directly with one another, while not including the crosslinked structure including a polymer chain interconnected directly with a photoinitiator.

According to an embodiment of the present disclosure, the crosslinked structure-containing polyolefin porous support includes only the crosslinked structure including polymer chains interconnected directly with one another, and includes no crosslinked structure including a polymer chain interconnected directly with a photoinitiator.

According to an embodiment of the present disclosure, the crosslinked structure-containing polyolefin porous support may have a crosslinking degree of 10-45%. For example, the crosslinked structure-containing polyolefin porous support may have a crosslinking degree of 15% or more, 20% or more, 30% or more, 32% or more, 35% or more, or 37% or more, and 40% or less, 37% or less, 35% or less, or 32% or less. When the crosslinked structure-containing polyolefin porous support has the above-defined range of crosslinking degree, it is possible to provide an increased modulus with ease, while providing a desired level of heat resistance. For example, when the crosslinked structure-containing polyolefin porous support has a crosslinking degree of 20% or more, the crosslinked structure-containing polyolefin porous support may easily have a meltdown temperature of 170°C or higher.

Herein, the crosslinking degree is determined by dipping the crosslinked structure-containing polyolefin porous support in xylene solution at 135°C, boiling it therein for 12 hours and measuring the residual weight, according to ASTM D2765, and is calculated as a percentage of the residual weight based on the initial weight.

According to an embodiment of the present disclosure, the crosslinked structure-containing polyolefin porous support may have a number of double bonds present in the polyolefin chains of 0.01-0.6 per 1000 carbon atoms, as determined by ¹H-NMR. For example, the crosslinked structure-containing polyolefin porous support may have a number of double bonds present in the polyolefin chains of 0.02 or more, 0.03 or more, 0.04 or more, 0.05 or more, 0.1 or more, 0.2 or more, 0.3 or more, 0.4 or more, or 0.5 or more, and 0.5 or less, 0.4 or less, 0.3 or less, 0.2 or less, or 0.1 or less per 1000 carbon atoms, as determined by ¹H-NMR. When the crosslinked structure-containing polyolefin porous support has the above-defined number of double bonds, it is possible to minimize the problem of degradation of battery performance at high temperature and/or high voltage.

According to an embodiment of the present disclosure, the number of double bonds present in the polyolefin chains, except the ends, of the crosslinked structure-containing polyolefin porous support may be 0.005-0.59 per 1000 carbon atoms. Reference will be made to the above description with reference to the expression `number of double bonds present in the polyolefin chains, except the ends'.

According to an embodiment of the present disclosure, the crosslinked structure-containing polyolefin porous support may have a thickness of 3-16 µm, or 5-12 µm. When the crosslinked structure-containing polyolefin porous support has the above-defined range of thickness, it is possible to ensure energy density, while preventing the separator from being damaged easily during the use of a battery.

According to an embodiment of the present disclosure, the crosslinked structure-containing separator for a lithium secondary battery may include: a crosslinked structure-containing polyolefin porous support; and an inorganic composite porous layer disposed on at least one surface of the crosslinked structure-containing polyolefin porous support and including an inorganic filler and a binder polymer.

The inorganic composite porous layer may be formed on one surface or both surfaces of the crosslinked structure-containing polyolefin porous support. The inorganic composite porous layer includes a binder polymer which attaches the inorganic filler particles to one another so that they may retain their binding states (i.e. the binder polymer interconnects and fixes the inorganic filler particles), and the inorganic filler may be bound to the crosslinked structure-containing polyolefin porous support by the binder polymer. The inorganic composite porous layer prevents the crosslinked structure-containing polyolefin porous support from undergoing a severe heat shrinking behavior at high temperature by virtue of the inorganic filler to improve the safety of the separator. For example, the separator may show a heat shrinkage of 20% or less, 2-15%, or 2-10% in each of the machine direction and the transverse direction, as determined after allowing the separator to stand at 120°C for 30 minutes.

According to an embodiment of the present disclosure, the inorganic composite porous layer may have a structure in which the inorganic filler particles are bound to one another by the binder polymer, while they are packed in contact with one another. In this manner, interstitial volumes are formed among the inorganic filler particles, and the interstitial volumes become vacant spaces to form pores.

There is no particular limitation in the inorganic filler, as long as it is electrochemically stable. In other words, there is no particular limitation in the inorganic filler, as long as it causes no oxidation and/or reduction in the range (e.g. 0-5 V based on Li/Li⁺) of operating voltage of an applicable electrochemical device. Particularly, when using an inorganic filler having a high dielectric constant, it is possible to improve the ion conductivity of an electrolyte by increasing the dissociation degree of an electrolyte salt, such as a lithium salt, in a liquid electrolyte.

For the above-mentioned reasons, according to an embodiment of the present disclosure, the inorganic filler may be an inorganic filler having a high dielectric constant of 5 or more, preferably 10 or more. Non-limiting examples of the inorganic filler having a dielectric constant of 5 or more may include any one selected from the group consisting of BaTiO₃, Pb(Zr,Ti)O₃ (PZT), Pb₁₋ₓLaₓZr_{1-y}Ti_{y}O₃ (PLZT, wherein 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH)₃, SiC, TiO₂, or a mixture thereof.

According to another embodiment of the present disclosure, the inorganic filler may be an inorganic filler having lithium-ion transportability, i.e. inorganic filler containing lithium elements and capable of transporting lithium ions, while not storing lithium. Non-limiting examples of the inorganic filler having lithium-ion transportability include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), such as Li_{3.25}Ge_{0.25}P_{0.75}S₄, lithium nitride (LiₓN_{y}, 0 < x < 4, 0 < y < 2), such as Li₃N, SiS₂-based glass (LiₓSi_{y}S_{z}, 0 < x < 3, 0 < y < 2, 0 < z < 4), such as Li₃PO₄-Li₂S-SiS₂, and P₂S₅-based glass (LiₓP_{y}S_{z}, 0 < x < 3, 0 < y < 3, 0 < z < 7), such as LiILi₂S-P₂S₅, or a mixture thereof.

According to an embodiment of the present disclosure, the inorganic filler may have an average particle diameter of 0.01-1.5 µm. When the inorganic filler has the above-defined range of average particle diameter, it is possible to form an inorganic composite porous layer having a uniform thickness and suitable porosity and to provide high dispersibility of inorganic filler and desired energy density.

Herein, the average particle diameter of the inorganic filler means D₅₀ particle diameter, and "D₅₀" means the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, D₅₀ may be determined by calculating the particle diameter at the point of 50% in the particle number accumulated distribution depending on particle diameter in the analyzer system.

The binder polymer may have a glass transition temperature (T_{g}) of -200 to 200°C. When the binder polymer satisfies the above-defined range of glass transition temperature, it can provide the finished inorganic composite porous layer with improved mechanical properties, such as flexibility and elasticity. The binder polymer may have ion conductivity. When the binder polymer has ion conductivity, it is possible to further improve the performance of a battery. The binder polymer may have a dielectric constant ranging from 1.0 to 100 (measured at a frequency of 1 kHz), or from 10 to 100. When the binder polymer has the above-defined range of dielectric constant, it is possible to improve the salt dissociation degree in an electrolyte.

According to an embodiment of the present disclosure, the binder polymer may include poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or two or more of them.

The acrylic copolymer may include, but is not limited to: ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

According to an embodiment of the present disclosure, the weight ratio of the inorganic filler to the binder polymer is determined considering the thickness, pore size and porosity of the finished inorganic composite porous layer, and may be 50:50-99.9:0.1. For example, the weight ratio of the inorganic filler to the binder polymer may be 60:40 or more, 70:30 or more, 80:20 or more, 90: 10 or more, or 99.5:0.5 or more, and 99.5:0.5 or less, 90: 10 or less, 80:20 or less, 70:30 or less, or 60:40 or less. When the weight ratio of the inorganic filler to the binder polymer satisfies the above-defined range, it is possible to ensure vacant spaces formed among the inorganic filler particles sufficiently, and thus to ensure the pore size and porosity of the inorganic composite porous layer with ease. In addition, it is possible to ensure the adhesion among the inorganic filler particles with ease.

According to an embodiment of the present disclosure, the inorganic composite porous layer may further include additives, such as a dispersant and/or a thickener. According to an embodiment of the present disclosure, the additives may include polyvinyl pyrrolidone (PVP), hydroxyethyl cellulose (HEC), hydroxypropyl cellulose (HPC), ethylhydroxyethyl cellulose (EHEC), methyl cellulose (MC), carboxymethyl cellulose (CMC), hydroxyalkylmethyl cellulose, cyanoethylene polyvinyl alcohol, or two or more of them.

According to an embodiment of the present disclosure, the inorganic composite porous layer may have an average pore size of 0.001-10 µm. The average pore size of the inorganic composite porous layer may be determined by using the capillary flow porometry. The capillary flow porometry measures the diameter of the smallest pore in the thickness direction. Therefore, in order to determine the average pore size of the inorganic composite porous layer alone by the capillary flow porometry, it is required to separate the inorganic composite porous layer from the crosslinked structure-containing polyolefin porous support, and to surround the separated inorganic composite porous layer with a non-woven web capable of supporting the same. Herein, the non-woven web should have a significantly larger pore size as compare to the pore size of the inorganic composite porous layer.

According to an embodiment of the present disclosure, the inorganic composite porous layer may have a porosity of 5-95%, or 10% or more, 20% or more, or 30% or more, and 95% or less, or 80% or less. The porosity corresponds to a value obtained by subtracting the volume expressed from the weight and density of each ingredient in the inorganic composite porous layer, from the volume calculated from the thickness, width and length of the inorganic composite porous layer.

The porosity of the inorganic composite porous layer may be determined from scanning electron microscopic (SEM) images, by using a mercury porosimeter, or through the BET 6-point method based on nitrogen gas adsorption flow using a porosimetry analyzer (e.g. Belsorp-II mini, Bell Japan Inc.).

According to an embodiment of the present disclosure, the inorganic composite porous layer may have a thickness of 1.5-5.0 µm on one surface of the crosslinked structure-containing polyolefin porous support. When the thickness of the inorganic composite porous layer satisfies the above-defined range, it is possible to provide high adhesion to an electrode and increased cell strength of a battery.

The crosslinked structure-containing separator for a lithium secondary battery according to an embodiment of the present disclosure includes the crosslinked structure-containing polyolefin porous support having a crosslinked structure including polymer chains interconnected directly with one another, and thus shows excellent high-temperature safety. For example, the crosslinked structure-containing separator for a lithium secondary battery according to an embodiment of the present disclosure may have an increased meltdown temperature, as compared to the meltdown temperature of a crosslinked structure-free separator for a lithium secondary battery. For example, the crosslinked structure-containing separator for a lithium secondary battery may have a meltdown temperature of 160°C or higher, 170°C or higher, or 180-230°C.

As used herein, the term `crosslinked structure-free separator for a lithium secondary battery' refers to: a separator including a non-crosslinked and crosslinked structure-free polyolefin porous support; or a separator including a non-crosslinked and crosslinked structure-free polyolefin porous support, and an inorganic composite porous layer disposed on at least one surface of the crosslinked structure-free polyolefin porous support, and containing an inorganic filler and a binder polymer.

The meltdown temperature may be determined through thermomechanical analysis (TMA). For example, a sample is taken in each of the machine direction and the transverse direction, and then the sample having a size of width 4.8 mm x length 8 mm is introduced to a TMA instrument (Q400, available from TA Instrument). Then, while a tension of 0.01 N is applied to the sample, the sample is heated to a temperature from 30°C to 220°C at a heating rate of 5°C/min, and the temperature where the sample undergoes a rapid increase in length and the sample is broken may be determined as the meltdown temperature.

The crosslinked structure-containing separator for a lithium secondary battery according to an embodiment of the present disclosure shows a smaller increase in shutdown temperature, as compared to the crosslinked structure-free separator for a lithium secondary battery, and also provides a small change in shutdown temperature. The crosslinked structure-containing separator for a lithium secondary battery according to an embodiment of the present disclosure undergoes an increase in meltdown temperature, as compared to crosslinked structure-free separator for a lithium secondary battery, but shows an insignificant increase in shutdown temperature, and thus can provide the separator with significantly enhanced high-temperature safety, while ensuring overcharge safety derived from the shutdown temperature.

According to an embodiment of the present disclosure, the crosslinked structure-containing separator for a lithium secondary battery may have a shutdown temperature of 145°C or lower, 140°C or lower, or 133-140°C. When the crosslinked structure-containing separator for a lithium secondary battery has the above-defined range of shutdown temperature, it is possible to ensure overcharge safety and to prevent the problem of an increase in resistance, caused by damages on the pores of the crosslinked structure-containing polyolefin porous support during high-temperature pressurization processes in the assemblage of a battery.

The shutdown temperature may be determined by measuring the time (sec) required for 100 mL of air to pass through a separator under a constant pressure of 0.05 MPa, when the separator is heated at a rate of 5°C/min, by using an air permeability tester, and determining a temperature where the separator undergoes a rapid increase in air permeability.

The crosslinked structure-containing separator for a lithium secondary battery according to an embodiment of the present disclosure uses a minimized amount of photoinitiator capable of crosslinking, and thus may show excellent strength even after crosslinking. For example, the crosslinked structure-containing separator for a lithium secondary battery according to an embodiment of the present disclosure may show a tensile strength of 1500 kgf/cm² or more, 1600 kgf/cm² or more, or 1600-4500 kgf/cm², or 1700-3500 kgf/cm², in each of the machine direction and the transverse direction.

The tensile strength refers to the strength of a specimen at the point of breaking, when the specimen is drawn in each of the machine direction and the transverse direction at a rate of 50 mm/min by using Universal Testing Systems (Instron^{®} 3345) according to ASTM D882.

The crosslinked structure-containing separator for a lithium secondary battery according to an embodiment of the present disclosure uses a minimized amount of photoinitiator capable of crosslinking, and thus causes no significant decrease in tensile strength in the machine direction and the transverse direction, as compared to the separator for a lithium secondary battery before crosslinking, thereby providing mechanical strength suitable for use as a separator. For example, the crosslinked structure-containing separator for a lithium secondary battery according to an embodiment of the present disclosure shows a change in tensile strength of 30% or less, 20% or less, 24% or less, 20% or less, 15% or less, or 0.1-15% or 0.3-10%.

The change in tensile strength may be calculated according to the following formula: Change (%) in tensile strength in machine direction = [(Tensile strength in machine direction of separator for lithium secondary battery before crosslinking) - (Tensile strength in machine direction of crosslinked structure-containing separator for lithium secondary battery after crosslinking)] / (Tensile strength in machine direction of separator for lithium secondary battery before crosslinking) X 100 Change (%) in tensile strength in transverse direction = [(Tensile strength in transverse direction of separator for lithium secondary battery before crosslinking) - (Tensile strength in transverse direction of crosslinked structure-containing separator for lithium secondary battery after crosslinking)] / (Tensile strength in transverse direction of separator for lithium secondary battery before crosslinking) X 100

As used herein, the term `crosslinked structure-containing separator for a lithium secondary battery after crosslinking' refers to: a separator including a crosslinked structure-containing polyolefin porous support; or a separator including a crosslinked structure-containing polyolefin porous support, and an inorganic composite porous layer disposed on at least one surface of the crosslinked structure-containing polyolefin porous support, and containing an inorganic filler and a binder polymer.

As used herein, the term `separator for a lithium secondary battery before crosslinking' refers to: a separator including a non-crosslinked and crosslinked structure-free polyolefin porous support; or a separator including a non-crosslinked and crosslinked structure-free polyolefin porous support, and an inorganic composite porous layer disposed on at least one surface of the crosslinked structure-free polyolefin porous support, and containing an inorganic filler and a binder polymer.

Since the crosslinked structure-containing separator for a lithium secondary battery according to an embodiment of the present disclosure includes a crosslinked structure-containing polyolefin porous support having a crosslinked structure including polymer chains interconnected directly with one another, the polyolefin porous support can retain substantially the same pore structure as the polyolefin porous support before crosslinking, even after crosslinking.

The crosslinked structure-containing separator for a lithium secondary battery according to an embodiment of the present disclosure may not undergo significant degradation of air permeability, weight per unit area, tensile elongation, puncture strength, electrical resistance, or the like, as compared to the air permeability, weight per unit area, tensile elongation, puncture strength, electrical resistance, or the like, of the separator for a lithium secondary battery before crosslinking, and also shows a small change in those properties.

The crosslinked structure-containing separator for a lithium secondary battery according to an embodiment of the present disclosure may show a change in air permeability of 10% or less, 0-10%, 0-5%, or 0-3%, as compared to the separator for a lithium secondary battery before crosslinking.

The change in air permeability may be calculated according to the following formula: Change (%) in air permeability = [(Air permeability of crosslinking structure- containing separator for lithium secondary battery after crosslinking) - (Air permeability of separator for lithium secondary battery before crosslinking)] / (Air permeability of separator for lithium secondary battery before crosslinking) X 100

The air permeability (Gurley) may be determined according to ASTM D726-94. Herein, Gurley refers to resistance against air flow and is determined by a Gurley densometer. The air permeability value described herein is expressed by the time (seconds), i.e. air permeation time, required for 100 cc or air to pass through a section of porous support sample having an area of 1 in² under a pressure of 12.2 in H₂O.

The crosslinked structure-containing separator for a lithium secondary battery according to an embodiment of the present disclosure may show a change in weight per unit area of 5% or less, or 0-5%, as compared to the separator for a lithium secondary battery before crosslinking.

The change in weight per unit area may be calculated according to the following formula: Change (%) in weight per unit area = [(Weight per unit area of crosslinked structure-containing separator for lithium secondary battery after crosslinking) - (Weight per unit area of separator for lithium secondary battery before crosslinking)] / (Weight per unit area of separator for lithium secondary battery before crosslinking) X 100

The weight per unit area (g/m²) is determined by preparing a sample having a width of 1 m and a length of 1 m and measuring the weight of the sample.

The crosslinked structure-containing separator for a lithium secondary battery according to an embodiment of the present disclosure may show a change in tensile elongation of 20% or less, or 0-20% in each of the machine direction and the transverse direction, as compared to the separator for a lithium secondary battery before crosslinking.

The change in tensile elongation may be calculated according to the following formula: Change (%) in tensile elongation in machine direction = [(Tensile elongation in machine direction of separator for lithium secondary battery before crosslinking) - (Tensile elongation in machine direction of crosslinked structure-containing separator for lithium secondary battery after crosslinking)] / (Tensile elongation in machine direction of separator for lithium secondary battery before crosslinking) X 100 Change (%) in tensile elongation in transverse direction = [(Tensile elongation in transverse direction of separator for lithium secondary battery before crosslinking) - (Tensile elongation in transverse direction of crosslinked structure-containing separator for lithium secondary battery after crosslinking)] / (Tensile elongation in transverse direction of separator for lithium secondary battery before crosslinking) X 100

The tensile elongation can be calculated according to the following formula, after the specimen is drawn in each of the machine direction and the transverse direction at a rate of 50 mm/min by using Universal Testing Systems (Instron^{®} 3345) according to ASTM D882, and the maximum length of the specimen elongated until the specimen is broken is measured. Tensile elongation (%) in machine direction = (Length of specimen in machine direction right before breaking - Length of specimen in machine direction before elongation) / (Length of specimen in machine direction before elongation) X 100 Tensile elongation (%) in transverse direction = (Length of specimen in transverse direction right before breaking - Length of specimen in transverse direction before elongation) / (Length of specimen in transverse direction before elongation) X 100

The crosslinked structure-containing separator for a lithium secondary battery according to an embodiment of the present disclosure may show a change in puncture strength of 10% or less, 0.5-10%, 1-9%, or 1.18-8.71%, as compared to the separator a lithium secondary battery before crosslinking.

Herein, the change in puncture strength may be calculated according to the following formula. Change (%) in puncture strength = [(Puncture strength of separator for lithium secondary battery before crosslinking) - (Puncture strength of crosslinked structure- containing separator for lithium secondary battery after crosslinking)] / (Puncture strength of separator for lithium secondary battery before crosslinking) X 100

According to an embodiment of the present disclosure, the puncture strength may be determined according to ASTM D2582. Particularly, after setting a round tip with a diameter of 1 mm to operate at a rate of 120 mm/min, the puncture strength may be determined according to ASTM D2582.

The crosslinked structure-containing separator for a lithium secondary battery according to an embodiment of the present disclosure may show a change in electrical resistance of 15% or less, 2-10%, or 2-5%, as compared to the separator a lithium secondary battery before crosslinking.

Herein, the change in electrical resistance may be calculated according to the following formula. Change (%) in electrical resistance = [(Electrical resistance of crosslinked structure-containing separator for lithium secondary battery after crosslinking) - (Electrical resistance of separator for lithium secondary battery before crosslinking)] / (Electrical resistance of separator for lithium secondary battery before crosslinking) X 100

The electrical resistance may be determined by allowing a coin cell manufactured by using a separator sample to stand at room temperature for 1 day and measuring the resistance of the separator through impedance analysis.

The crosslinked structure-containing separator for a lithium secondary battery as described above may be interposed between a positive electrode and a negative electrode to obtain a lithium secondary battery.

The lithium secondary battery may have various shapes, such as a cylindrical shape, a prismatic shape, a pouch-like shape, or the like.

The lithium secondary battery may include a lithium metal secondary battery, a lithium-ion secondary battery, a lithium polymer secondary battery, a lithium-ion polymer secondary battery, or the like.

The electrodes used in combination with the crosslinked structure-containing separator for a lithium secondary battery according to the present disclosure are not particularly limited, and may be obtained by allowing electrode active materials to be bound to an electrode current collector through a method generally known in the art.

Among the electrode active materials, non-limiting examples of a positive electrode active material include, but are not limited to: layered compounds, such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiVsOs, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; Fe₂(MoO₄)₃; or the like.

Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably.

Non-limiting examples of a positive electrode current collector include foil made of aluminum, nickel or a combination thereof. Non-limiting examples of a negative electrode current collector include foil made of copper, gold, nickel, copper alloys or a combination thereof.

According to an embodiment of the present disclosure, the conductive material used in each of the negative electrode and the positive electrode may be added in an amount of 1-30 wt% based on the total weight of the active material layer. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

According to an embodiment of the present disclosure, the binder used in each of the negative electrode and the positive electrode independently is an ingredient which assists binding between an active material and a conductive material and binding to a current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene terpolymer (EPDM), sulfonated EPDM, styrene-butadiene rubber, fluoro-rubber, various copolymers, or the like.

According to an embodiment of the present disclosure, the lithium secondary battery includes an electrolyte, which may include an organic solvent and a lithium salt. In addition, the electrolyte may include an organic solid electrolyte or an inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, γ-butyrolactone, 1,2-dimethoxyethane, tetrahydroxy franc, 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulforane, methyl sulforane, 1,3-dimethyl-2-imidazolidione, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, lithium chloroborate, lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH and Li₃PO₄-Li₂S-SiS₂.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the crosslinked structure-containing separator for a secondary battery may be applied to a battery through lamination, stacking and folding of the separator with electrodes, besides a conventional process, winding.

According to an embodiment of the present disclosure, the crosslinked structure-containing separator for a secondary battery may be interposed between the positive electrode and the negative electrode. When an electrode assembly is formed by assembling a plurality of cells or electrodes, the separator may be interposed between the adjacent cells or electrodes. The electrode assembly may have various structures, such as a simple stack type, a j elly-roll type, a stacked-folded type, a laminated-stacked type, or the like.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, 30 parts by weight of polyethylene (Korea Petrochemical Ind. Co. Ltd., VH035) was mixed with 70 parts by weight of liquid paraffin oil (LP350 available from Kukdong Oil & Chem.), and the resultant mixture was introduced to and kneaded in a biaxial extruder to extrude a polyolefin composition.

The polyolefin composition was passed through a die and a cooling roll to be molded into a sheet-like shape, and then biaxial orientation was carried out in the machine direction (MD) and the transverse direction (TD) by using a tenter type differential orientation machine.

The resultant oriented sheet was dipped in an extraction solution including methylene chloride and 2-isorpopyl thioxanthone (Sigma Aldrich Co.) as a photoinitiator in the lower layer, and water in the upper layer to extract paraffin oil, and then thermal fixing was carried out at 130°C to obtain a polyolefin porous support. Herein, the photoinitiator was added in an amount of 0.05 parts by weight based on 100 parts by weight of methylene chloride.

Then, UV rays were irradiated to the polyolefin porous support to an accumulated light dose, i.e. UV irradiation dose of 500 mJ/cm². Herein, the UV irradiation intensity was set to 80% of the UV light source.

A high-pressure mercury lamp (high-pressure mercury lamp available from Lichtzen, LH-250/800-A) was used as a UV light source.

In this manner, a crosslinked structure-containing separator for a lithium secondary battery, including a crosslinked structure-containing polyolefin porous support having a crosslinked structure including polymer chains interconnected directly with one another, was obtained.

### Comparative Example 1

A crosslinked structure-containing separator for a lithium secondary battery, including a crosslinked structure-containing polyolefin porous support having a crosslinked structure including polymer chains interconnected directly with one another, was obtained in the same manner as Example 1, except that the extraction solution was free from water.

### Comparative Example 2

A separator was obtained in the same manner as Example 1, except that the content of the photoinitiator was 0.005 parts by weight based on 100 parts by weight of methylene chloride.

### Test Example: Evaluation of Physical Properties of Separator

The separator according to each of Example 1 and Comparative Examples 1 and 2 was determined in terms of crosslinking degree, meltdown temperature, tensile strength in each of the machine direction and the transverse direction, and a change in tensile strength in each of the machine direction and the transverse direction before and after crosslinking. The results are shown in the following Table 1.

### (1) Evaluation of Crosslinking Degree

The crosslinking degree was evaluated by dipping the separator according to each of Examples 1 and Comparative Examples 1 and 2 in xylene solution at 135°C, boiling it therein for 12 hours, measuring the residual weight, according to ASTM D2765, and calculating a percentage of the residual weight based on the initial weight.

### (2) Evaluation of Meltdown Temperature

The meltdown temperature was determined by taking a sample from each separator in each of the machine direction (MD) and the transverse direction (TD) and analyzing each sample through thermomechanical analysis (TMA). Particularly, a sample having a size of width x length of 4.5 mm x 8 mm was introduced to a TMA instrument (TA Instrument, Q400) and warmed from a temperature of 30°C to 220°C at a heating rate of 5°C/min, while applying a tension of 0.01 N thereto. As the temperature was increased, the sample showed a change in length. Then, the temperature at which point the sample was broken after a rapid increase in length was measured.

### (3) Evaluation of Tensile Strength in Machine Direction and Transverse Direction and Change in Tensile Strength in Machine Direction and Transverse Direction before and after Crosslinking

A specimen having a size of 100 mm x 15 mm was prepared.

The tensile strength was determined as the strength of the specimen at the point of breaking, when the specimen was drawn at 25°C in each of the machine direction and the transverse direction at a rate of 50 mm/min by using Universal Testing Systems (Instron^{®} 3345) according to ASTM D882.

In addition, a change in tensile strength in each of the machine direction and the transverse direction before and after crosslinking was calculated according to the following formulae. Herein, `separator for a lithium secondary battery before crosslinking' refers to the polyethylene porous support (Korea Petrochemical Ind. Co. Ltd., VH035). Change (%) in tensile strength in machine direction = [(Tensile strength in machine direction of separator for lithium secondary battery before crosslinking) - (Tensile strength in machine direction of crosslinked structure-containing separator for lithium secondary battery after crosslinking)] / (Tensile strength in machine direction of separator for lithium secondary battery before crosslinking) X 100 Change (%) in tensile strength in transverse direction = [(Tensile strength in transverse direction of separator for lithium secondary battery before crosslinking) - (Tensile strength in transverse direction of crosslinked structure-containing separator for lithium secondary battery after crosslinking)] / (Tensile strength in transverse direction of separator for lithium secondary battery before crosslinking) X 100

**[Table 1]**

| | | Ex. 1 | Comp. Ex. 1 | Comp. Ex. 2 |
|---|---|---|---|---|
| Crosslinking degree (%) | | 32 | 41 | 3 |
| Meltdown temperature(°C) | | 199 | 182 | 149 |
| Tensile strength after crosslinking (kgf/cm²) | MD | 2,670 | 1,660 | 2,680 |
| | TD | 2,380 | 1,475 | 2,390 |
| Change in tensile strength (TD, %) | | 0.24 | 37.5 | 0.02 |

As can be seen from Table 1, the separator according to Example 1 has a meltdown temperature of 160°C or higher and shows a significantly small change in tensile strength.

On the contrary, it can be seen that the separator according to Comparative Example 1 has a meltdown temperature of 160°C or higher, but shows a significantly large change in tensile strength. It is thought that this is because an excessive amount of photoinitiator cannot be removed from the surface of the polyolefin porous support due to the absence of the non-solvent for the photoinitiator in the extraction solution, and thus the polyolefin porous support is over-crosslinked. It can be also seen that the separator according to Comparative Example 2 uses an excessively small amount of photoinitiator, and thus the polyolefin porous support cannot be crosslinked sufficiently and cannot satisfy a meltdown temperature of 160°C or higher.

## Claims

1. A method for manufacturing a crosslinked structure-containing separator for a lithium secondary battery, comprising the steps of:
supplying polyolefin and a diluting agent to an extruder to extrude a polyolefin composition;
molding and orienting the extruded polyolefin composition into the form of a sheet;
dipping the oriented sheet in an extraction solution to extract the diluting agent, thereby providing a polyolefin-based porous support; and
irradiating ultraviolet rays to the polyolefin-based porous support,
wherein the extraction solution has an upper layer and a lower layer,
the lower layer comprises a photoinitiator and a solvent for the photoinitiator,
the upper layer comprises a non-solvent for the photoinitiator, and
the photoinitiator is present in an amount of 0.01-0.3 parts by weight based on 100 parts by weight of the solvent for the photoinitiator.

2. The method for manufacturing a crosslinked structure-containing separator for a lithium secondary battery according to claim 1, wherein the solvent for the photoinitiator is an extraction solvent for the diluting agent.

3. The method for manufacturing a crosslinked structure-containing separator for a lithium secondary battery according to claim 2, wherein the extraction solvent for the diluting agent comprises methyl ethyl ketone, methylene chloride, hexane, or two or more of them.

4. The method for manufacturing a crosslinked structure-containing separator for a lithium secondary battery according to claim 1, wherein the photoinitiator comprises a Type 2 photoinitiator.

5. The method for manufacturing a crosslinked structure-containing separator for a lithium secondary battery according to claim 4, wherein the photoinitiator comprises thioxanthone (TX), a thioxanthone derivative, benzophenone (BPO), a benzophenone derivative, or two or more of them.

6. The method for manufacturing a crosslinked structure-containing separator for a lithium secondary battery according to claim 1, wherein the non-solvent for the photoinitiator comprises water, methanol, ethanol, isopropanol, butanol, butanediol, ethylene glycol, propylene glycol, tripropylene glycol, or two or more of them.

7. The method for manufacturing a crosslinked structure-containing separator for a lithium secondary battery according to claim 1, wherein the ultraviolet rays are irradiated at a dose of 10-2000 mJ/cm².

8. A crosslinked structure-containing separator for a lithium secondary battery obtained by the method as defined in any one of claims 1 to 7.

9. The crosslinked structure-containing separator for a lithium secondary battery according to claim 8, which has a meltdown temperature of 160°C or higher.

10. The crosslinked structure-containing separator for a lithium secondary battery according to claim 8, which has a crosslinking degree of 10-45%.

11. The crosslinked structure-containing separator for a lithium secondary battery according to claim 8, which shows a tensile strength of 1,500 kgf/cm² or more in each of the machine direction and the transverse direction.

12. The crosslinked structure-containing separator for a lithium secondary battery according to claim 8, which shows a change in tensile strength of 30% or less in each of the machine direction and the transverse direction, as compared to the separator for a lithium secondary battery before crosslinking.

13. The crosslinked structure-containing separator for a lithium secondary battery according to claim 8, which has a shutdown temperature of 145°C or less.

14. A lithium secondary battery comprising a positive electrode, a negative electrode and a separator interposed between the positive electrode and the negative electrode, wherein the separator is the crosslinked structure-containing separator for a lithium secondary battery as defined in claim 8.
